# EUROPEAN PATENT SPECIFICATION

(11) **EP 3 504 983 B1**
(45) Date of publication and mention of the grant of the patent: **30.08.2023**
(21) Application number: 19153368.6
(22) Date of filing: 30.12.2016
(51) Int. Cl.: A23L 2/60, A23L 27/30, A23L 2/54

(54) **SWEETENING COMPOSITIONS**
SÜSSUNGSZUSAMMENSETZUNGEN
COMPOSITION D'ÉDULCORANT

(43) Date of publication of application: 03.07.2019
(62) Divisional of application: 16207626.9
(73) Proprietor: Red Bull GmbH, 5330 Fuschl am See (AT)
(72) Inventor: Nachbagauer, Josef, Fuschl am See, 5330 (AT); Urban-Klik, Manfred, Fuschl am See, 5330 (AT); Boehringer, Volker, Fuschl am See, 5330 (AT)
(74) Representative: Metten, Karl-Heinz

(56) References cited:
- EP-A1- 2 486 806
- EP-A1- 3 017 708
- WO-A1-2012/177727
- WO-A1-2013/060746
- WO-A2-2010/014813
- WO-A2-2013/079187
- US-A1- 2007 116 836

## Description

The present invention relates to sweetening compositions, their use for the preparation of sweetening syrups and beverages as well as to the preparation of said beverages.

Common soft drinks usually contain significant amounts of natural sugars such as sucrose, glucose, fructose or mixtures thereof. The caloric content of these natural sugars usually is in the range from 3.6 to 3.9 kcal/g. Many attempts have been made to reduce the caloric content of beverages such as soft drinks. In some instances natural sugars have been replaced by steviol glycosides. Some steviol glycosides have a sweetening power which is about 240 to 400 times that of natural sugar sucrose. Steviol glycosides are derived from extracts of the leaves of the stevia plant (*Stevia rebaudiana Bertoni*)*.* The four major steviol glycosides found in the leaves of the stevia plant are stevioside (about 5 to 10 wt-%), rebaudioside A (about 2 to 4 wt-%), rebaudioside C (about 1 to 2 wt-%) and dulcoside A (about 0.5 to 1 wt-%). Further steviol glycosides which are found in the extract of the leaves of the stevia plant, however in rather minute quantities, are rebaudioside B, rebaudioside D and rebaudioside E. The common aglycon of all steviol glycosides is steviol which belongs to the class of diterpenes.

Unfortunately, beverages sweetened with steviol glycosides suffer some drawbacks which for many consumers outway the caloric content of conventional beverages. Steviol glycosides are known to cause a bitter and/or licorice-like aftertaste, in some instances also a metallic aftertaste. In addition, the sweet sensation is retarded to some extent, that is, the sweetening exhibit a so-called lingering. In some cases steviol glycosides are also responsible for a blunt or dry mouthfeel.

In EP 2 519 118 sweetening compositions are disclosed containing a sweetener and at least one sweetness enhancer chosen from terpenes, flavonoids, amino acids, proteins, polyols, other known natural sweeteners, seco-dammarane glycosides, and analogues thereof. Suitable sweetening enhancer are reported to include stevia sweeteners, such as stevioside, steviolbioside, rebaudioside A, rebaudioside B, rebaudioside C, rebaudioside D, rebaudioside F, and dulcoside A. The at least one sweetness enhancer has to be present in the composition in an amount at or below the sweetness detection threshold level of the at least one sweetness enhancer, and the at least one sweetener and the at least one sweetness enhancer are different.

In EP 2 386 211 the use of rubusoside for masking, reducing or suppressing a bitter, sour and/or astringent taste impression of a bitter, sour and/or astringent-tasting substance is described. Compositions containing rubusoside shall mask, reduce or suppress in food products and in pharmaceuticals the bitter, sour and/or astringent taste impression of compounds such as steviosides and rebaudioside A.

And, WO 2008/049256 addresses a sweetened consumable comprising a) at least 0.0001 % of at least one sweetener, wherein said sweetener includes sucrose, fructose, glucose, high fructose corn syrup, corn syrup, xylose, arabinose, rhamnose, erythritol, xylitol, mannitol, sorbitol, inositol, acesulfame potassium, aspartame, neotame, sucralose, saccharine, or combinations thereof, wherein said at least one sweetener or sweetener combination is present in a concentration above the sweetness detection threshold in a concentration of at least isosweet to 2% sucrose, and b) at least one sweetness enhancer selected from the group consisting of naringin dihydrochalcone, mogroside V, swingle extract, rubusoside, rubus extract, stevioside, and rebaudioside A. Each sweetness enhancer shall be present in a concentration near its sweetness detection threshold. For naringin dihydrochalcone this concentration shall be from 2 to 60 ppm, for rubusoside from 1.4 ppm to 56 ppm, for rubus extract from 2 ppm to 80 ppm, for mogroside V from 0.4 ppm to 12.5 ppm, for swingle extract from 2 to 60 ppm, for stevioside from 2 to 60 ppm, and for rebaudioside A from 1 to 30 ppm.

EP 3 017 708 A1 is about a sweetening composition comprising rebaudioside A, rebaudioside B and rebaudioside D wherein, based on the total weight of rebaudioside A, rebaudioside B and rebaudioside D, rebaudioside A is present in an amount in the range from 80.0 to 99.0 wt-%, rebaudioside B is present in an amount in the range from 0.1 to 1.5 wt-%, and rebaudioside D is present in an amount in the range from 0.9 to 18.5 wt-%. These sweetening compositions shall provide low-calorie beverages having been sweetened by use of steviol glycosides which do not suffer from a bitter or licorice-like aftertaste and/or which do not cause a blunt or dry mouthfeel and/or which do not exhibit a delayed onset of the sensation of sweetness.

Also many other attempts have been made to overcome the afore-mentioned shortcomings of steviol glycoside sweeteners such as a bitter and/or licorice-like aftertaste, a blunt or dry mouthfeel and/or a sweet aftertaste.

For example, according to WO 2012/073121 A2 the bitter aftertaste of steviol glycosides shall be decreased or eliminated by the reduction or elimination of rebaudioside C or dulcoside A or both from stevia compositions. However, it has been found that the reduction of rebaudioside C and/or dulcoside A as such does not guarantee a reduction in bitter aftertaste. Moreover, even with stevia compositions being void of rebaudioside C or dulcoside A consumers experience a slow onset and sometimes even a longer duration of the sweetness sensation.

In WO 20081147726 it is described that a more sugar-like flavor profile shall be obtained by sweetener compositions comprising at least a) one sweetness enhancer such as urea or thiourea, b) at least one sweetener comprising a carbohydrate sweetener, a natural high-potency sweetener, a synthetic high-potency sweetener or a combination thereof such as rebaudioside compounds, sucralose, aspartame or acesulfame potassium, and c) at least one sweet taste improving composition selected from the group consisting of carbohydrates, polyols, amino acids, or mixtures thereof.

New sweetened beverage formulations which do not exhibit a bitter aftertaste shall be obtained according to EP 2 474 240 A1 by use of rebaudioside D and an acidulant comprising at least lactic acid and one or both of tartaric acid and citric acid, and no phosphoric acid.

From WO 2011/146463 A2 it can be derived that the bitterness in an otherwise sweet composition containing steviol glycosides shall be masked by incorporating an increased amount, relative to naturally occurring compositions, of rebaudioside D.

EP 2 486 806 A1 discloses a low-calorie orange juice drink which makes use of a mixture of 84 wt-% rebaudioside A and 16 wt-% rebaudioside D. Different from a low-calorie orange juice having been sweetened with a conventional stevia extract a pleasant taste similar to sucrose, a full mouthfeel, and no bitterness and no aftertaste shall be observed during sensory evaluation. A similar outcome was reported for a zero-calorie carbonated beverage.

According to WO 2008/112967 A1 the metallic aftertaste experienced with beverages containing conventional steviol glycosides shall be masked by the presence of anisic acid.

And, in WO 2012/109585 A1 it is disclosed that attributes such as bitterness, sweet aftertaste and licorice flavor of steviol glycosides may be overcome by sweetening compositions comprising a blend of rebaudioside A, rebaudioside B and steviol glycosides, in particular when the ratio of rebaudioside B to total steviol glycosides in the blend ranges from 0.5 % to about 50 % and more preferably from about 5 % to about 40 %.

Sucrose being the standard natural sweetener has a characteristic time and intensity sweetness profile. Whereas some artificial sweeteners have a more rapid onset of sweetness than sucrose, most artificial sweeteners such as stevia compounds have not only a significantly slower onset but also exhibit a significantly longer linger than sucrose. The afore-mentioned drawbacks associated with the use of steviol glycosides are still not overcome to a satisfactory extent. It is therefore desirable to obtain beverages, which contain less or no natural sweeteners, and which have a much improved sweetness and aroma profile.

Accordingly, there still is a need to provide low-calorie beverages which do not exhibit a delayed onset of the sensation of sweetness and which, optionally, also do not suffer from a bitter or licorice-like aftertaste and/or which do not cause a blunt or dry mouthfeel. Hence, it has been a major goal of the present invention to attain a temporal sweetening profil similar or even essentially identical to that of natural sugar, i.e. a natural sweetening profile, in particular with respect to both the onset of sweetness and its lingering time.

The problem underlying the present invention has been solved by a sweetening composition, comprising a) acesulfam and/or aspartam, in particular acesulfam, b) sucralose and/or at least one stevia compound, in particular selected from the group consisting of steviol glycosides, rebaudiosides and mixtures thereof, and/or saccharin and/or cyclamate, c) neohesperidin and/or thaumatine and/or rubusoside and/or at least one rubusoside derivative and/or phloretin and/or trilobatin and/or monatin and/or hesperetin, d) at least one tannin, in particular tannic acid and/or at least one tannic acid derivative or a composition or extract containing tannic acid and/or at least one tannic acid derivative.

In this sweetening composition of the invention component d), based on the at least one tannin, in particular tannic acid and/or the at least one tannic acid derivative, is present in an amount in the range from 10 mg/l to 300 mg/l and preferably in the range from 25 to 250 mg/l.

Simultaneously, said sweetening composition of the invention is characterized in that, based on the total weight of component a), in particular acesulfam, component b), in particular sucralose, component c), in particular neohesperidine, and component d), in particular tannic acid and/or at least one tannic acid derivative, the component a) is present in an amount in the range from 10 to 50 wt-%,the component b) is present in an amount in the range from 15 to 65 wt-%, the component c) is present in an amount in the range from 0,1 to 4 wt-%, and the component d) is present in an amount in the range from 5 to 50 wt-%, wherein in each case the sum of components a, b), c) and d) always adds up to 100 wt-%.

Among the compounds of component c) of the sweetening composition of the present invention neohesperidine and rubusoside are preferred, neohesperidine being particularly preferred.

Such a sweetening composition according to the invention is particularly preferred which comprises a) acesulfam and/or aspartame, in particular acesulfam, b) sucralose or saccharin or at least one stevia compound, in particular selected from the group consisting of steviol glycosides, rebaudiosides and mixtures thereof, c) neohesperidin, and d) at least one tannin, in particular tannic acid and/or at least one tannic acid derivative or a composition or extract containing tannic acid and/or at least one tannic acid derivative, wherein component d), based on the at least one tannin, in particular tannic acid and the at least one tannic acid derivative, is present in an amount in the range from 10 mg/l to 300 mg/l and preferably in the range from 25 to 250 mg/l if the composition of said embodiment is an aqueous composition, in particular in the form of a beverage.

According to a preferred embodiment of the sweetening composition of the invention, based on the total weight of component a), in particular acesulfam, component b), in particular sucralose, component c), in particular neohesperidine, and component d), in particular tannic acid and/or at least one tannic acid derivative, the component a) is present in an amount in the range from 15 to 45 wt-%, in particular 20 to 40 wt-%,the component b) is present in an amount in the range from 20 to 55 wt-%, in particular 30 to 45 wt-%, the component c) is present in an amount in the range from 0,2 to 3 wt-%, in particular 0,5 to 2 wt-%, and the component d) is present in an amount in the range from 10 to 40 wt-%, in particular 15 to 35 wt-%, wherein in each case the sum of components a), b), c) and d) always adds up to 100 wt-%.

Tannins in the meaning of the present invention shall comprise polyphenols, in particular so-called plant polyphenols, which exhibit an astringent sensation. It is presently believed that said astringent sensation is caused by or associated with a binding reaction of said polyphenols to proteins. For example, tannic acid coagulates albumen and gelatin. Tannins usually have two or three phenolic hydroxyl groups on the phenyl ring. Tannins can, for example, be classified into pyrogallol type tannins and the catechol type tannins. Tannins can also be classified into so-called hydrolysable tannins, e.g. based on ellagic acid and gall ic acid, and condensed tannins, e.g. based on catechol. Tannins of the present invention can be derived from any of the aforementioned classified groups.

Suitable tannins encompass for example ellagitannins, such as punicalagin and geranii, and gallotannins which belong to the class of hydrolysable tannins, as well as stilbenoids such as astringin or resveratrol. Ellagitannins usually contain various numbers of hexahydroxydiphenoyl (HHDP) units, as well as galloyl units and/or sanguisorboyl units bound to sugar moiety. Suitable representatives of tannins also comprise epigallocatechin gallate, epicatechin gallate, and phlorotannins.

Tannins can for example be obtained from extracts of oak or of pomegranates, in particular pomegranate rind extracts. For example, gallic acid is found in gallnuts, sumac, witch hazel, tea leaves, oak bark,

The composition or extract containing at least one tannin, in particular tannic acid and/or at least one tannic acid derivative, can be derived from seeds, bark, cones, husk, and/or heartwood of oak, pomegranate, chestnut, gallnut or mimosa, in particular from oak or pomegranate.

Tannic acid in the meaning of the present invention in particular comprises polygalloyl glucoses and polygalloyl quinic acid esters with the number of galloyl moieties per molecule in particular ranging from 2 up to 12, in particular 3 to 12, e.g. decagalloyl glucose. Accordingly, tannic acid in the meaning of the present invention can be understood to be, for example, formed of gallic acid molecules and glucose. Tannic acid will usually hydrolyze into glucose and gallic acid and/or ellagic acid units. In general, with the term tannic acid both an individual compound as well as a mixture of two or more compounds is meant.

Enzyme-treated steviol glycosides include those steviol glycosides having been treated with, for example, cyclomaltodextrin glucanotransferase (CGTase).

Rubusoside (CAS No: 64849-39-4) can be found in leaves of Rubus suavissimus S. Lee (Chinese sweet leaf). Rubusosides in the meaning of the present invention shall also comprise enzymatically-treated rubusosides.

Particularly preferable results as to an improved sweetening profile, i.e. a sweetening profile coming close to or being even essentially identical to that of natural sugar, that is a so-called natural sweetening profile, is obtained with the sweetening composition of the present invention in which component b) comprises or consists of sucralose, saccharin and cyclamate or, alternatively, in which component b) comprises or consists of at least one stevia compound, in particular selected from the group consisting of steviol glycosides, rebaudiosides and mixtures thereof, saccharin and cyclamate.

In the sweetening compositions of the invention, in particular in the form of an aqueous composition, preferably in the form of a beverage, acesulfam and/or aspartame is preferably present in an amount in the range from 25 to 250 mg/l, more preferably in the range from 50 to 200 mg/l and in particular in the range from 75 to 150 mg/l. Alternatively or in addition, in said sweetening compositions of the invention sucralose preferably is present in an amount in the range from 20 to 750 mg/1, more preferably in the range from 40 mg/l to 550 mg/l and in particular in the range from 60 to 450 mg/l. And, alternatively or in addition, in said sweetening compositions of the invention neohesperidin preferably is present in an amount in the range from 0.01 mg/l to 20 mg/l, more preferably in the range from 0,1 mg/l to 15 mg/l and in particular in the range from 1,0 to 10 mg/l. Alternatively or in addition, in said sweetening compositions of the invention saccharin preferably is present in an amount in the range from 10 mg/l to 750 mg/l, more preferably in the range from 20 mg/l to 500 mg/l and in particular in the range from 30 to 400 mg/l. And, alternatively or in addition, in said sweetening compositions of the invention cyclamate preferably is present in an amount in the range from 10 mg/l to 500 mg/1, more preferably in the range from 50 mg/l to 300 mg/l and in particular in the range from 75 to 200 mg/l. And, alternatively or in addition, in said sweetening compositions of the invention thaumatine preferably is present in an amount in the range from 0.01 mg/l to 10 mg/l, more preferably in the range from 0,05 mg/l to 5 mg/l and in particular in the range from 0,1 to 2 mg/l. And, alternatively or in addition, in said sweetening compositions of the invention rubusoside and/or at least one rubusoside derivative preferably is present in an amount in the range from 5 to 200 mg/l, more preferably in the range from 10 mg/l to 150 mg/l and in particular in the range from 20 to 125 mg/l. And, alternatively or in addition, in said sweetening compositions of the invention phloretin preferably is present in an amount in the range from 1 to 250 mg/l, more preferably in the range from 5 mg/l to 200 mg/l and in particular in the range from 10 to 150 mg/l. And, alternatively or in addition, in said sweetening compositions of the invention trilobatin preferably is present in an amount in the range from 0,1 to 250 mg/l, more preferably in the range from 1 mg/l to 200 mg/l and in particular in the range from 5 to 150 mg/l. And, alternatively or in addition, in said sweetening compositions of the invention monatin preferably is present in an amount in the range from 0.01 mg/l to 20 mg/l, more preferably in the range from 0,1 mg/l to 10 mg/l and in particular in the range from 0,05 to 5 mg/l. And, alternatively or in addition, in said sweetening compositions of the invention hesperetin preferably is present in an amount in the range from 1 to 750 mg/l, more preferably in the range from 10 mg/l to 500 mg/l and in particular in the range from 25 to 250 mg/l.

In the sweetening compositions according to the present invention the at least one stevia compound preferably is a mixture comprising, in particular consisting of, rebaudioside A, rebaudioside B and rebaudioside D wherein, based on the total weight of rebaudioside A, rebaudioside B and rebaudioside D, rebaudioside A is present in an amount in the range from 80.0 to 99.0 wt-%, rebaudioside B is present in an amount in the range from 0.1 to 1.5 wt-%, and rebaudioside D is present in an amount in the range from 0.9 to 18.5 wt-%.

Moreover, in the sweetening compositions according to the present invention the at least one stevia compound preferably is a mixture comprising, in particular consisting of, rebaudioside A, rebaudioside B and rebaudioside D wherein, based on the total weight of rebaudioside A, rebaudioside B and rebaudioside D, rebaudioside A is present in an amount in the range from 85.0 to 95.0 wt-%, rebaudioside B is present in an amount in the range from 0.2 to 1.2 wt-%, and rebaudioside D is present in an amount in the range from 4.8 to 13.8 wt-%.

Furthermore, in the sweetening compositions according to the present invention rebaudioside A is present in an amount in the range from 86.0 to 94.3 wt-%, rebaudioside B is present in an amount in the range from 0.3 to 0.9 wt-%, and rebaudioside D is present in an amount in the range from 5.4 to 13.1 wt-%, in each case based on the total weight of rebaudioside A, rebaudioside B and rebaudioside D.

In a particular preferred version of the sweetening compositions according to the present invention rebaudioside A is present in an amount in the range from 90.5 to 94.0 wt-%, rebaudioside B is present in amount in the range from 0.2 to 1.0 wt-% and rebaudioside D is present in amount in the range from 5.8 to 8.5 wt-%, based on the total weight of rebaudioside A, rebaudioside B and rebaudioside D, or
rebaudioside A is present in an amount in the range from 90.9 to 94.4 wt-%, rebaudioside B is present in amount in the range from 0.2 to 0.5 wt-% and rebaudioside D is present in amount in the range from 5.4 to 8.6 wt-%, in each case based on the total weight of rebaudioside A, rebaudioside B and rebaudioside D.

Steviolglycosides such as rebaudioside A, rebaudioside B, rebaudioside D, rebaudioside C, rebaudioside E, rebaudioside F, stevioside, dulcoside, rubusoside and steviolbioside can be detected and determined according to HPLC-UV as specified in JECFA (2010) Steviol Glycosides, FAO JECFA Monograph 10, FAO, Rome.

In the sweetening compositions of the present invention the at least one natural sweet-tasting carbohydrate preferably is selected from the group consisting of a natural sweet-tasting monosaccharide, a natural sweet-tasting disaccharide, a sweet-tasting sugar alcohol and a mixture thereof. While said the sweet-tasting natural monosaccharide preferably is selected from the group consisting of fructose, glucose, mannose, rhamnose, xylose, taga-tose, galactose, and mixtures thereof, said sweet-tasting natural disaccharide is preferably selected from the group consisting of sucrose, lactose, maltose and mixtures thereof. Moreover, said sweet-tasting sugar alcohol preferably is selected from the group consisting of erythritol, glycerol, lactitol, maltitol, mannitol, sorbitol, xylitol, galactitol and mixtures thereof.

With the sweetening compositions of the present invention it is particularly preferred to make use of sucrose as the sweet-tasting natural disaccharide.

The sweetening compositions of the present invention can further comprise at least one flavoring ingredient selected from the group consisting of galangal, cocoa, cinnamon, lemon, lemon juice concentrate, coca leaf, orange, orange oil, corn mint, pine, cardamom, mace, clove, lime, lime oil, nutmeg, nutmeg oil, mustard seeds, mustard seed oil, caramel, rosemary, pepper, honey, ginger, vanilla, licorice, licorice extract, cola nut and cola nut extract or mixtures thereof.

In a particularly preferred embodiment the sweetening compositions of the present invention further comprise taurine and/or caffeine. Accordingly, the sweetening compositions of the present invention can be used for sweetening beverages, in particular soft drinks or energy drinks.

Interestingly, the sweetening compositions of the present invention are also suited to prepare precursor compositions in the form of a syrup which can be easily stored and transported and can be used on demand for the preparation of in particular carbonated beverages.

The problem underlying the present invention has also been solved by a beverage comprising a sweetening composition according to the present invention. Here, the sweetening composition according to the present invention can already as such represent an aqueous composition, in particular a beverage. Alternatively, said sweetening composition according to the present invention, without added water present, can also represent a dry mixture, in particular in powder and/or particulate form. However, even if the sweetening composition according to the present invention represent aqueous compositions still further ingredients such as flavors or thickening agents may be added to form, for example, a commercial beverage.

Suitable beverages according to preferred embodiments are characterized in that rebaudioside A, B and D in combination are present in the beverage in a concentration in the range from 0.01 to 1.0 g/1, preferably from 0.05 to 0.75 g/l and more preferably from 0.1 to 0.6 g/l (determined at ambient temperature and 1 bar).

There are beverages in which the sweet-tasting natural carbohydrates and the sweet-tasting sugar alcohols are present in combination in the beverage in a concentration not above 40 g/1, preferably in the range from 5 g/l to 35 g/l and more preferably in the range from 10 g/l to 25 g/l (determined at ambient temperature and 1 bar). Ambient temperature in the meaning of the present invention shall mean room temperature, i.e. a temperature in the range from 20°C to 25°C.

The beverages of the present invention comprise, in particular carbonated, soft drinks and energy drinks. Suitable soft drinks also include cola-flavored soft drinks, wherein cola-flavored soft drinks also encompass cola-flavored-type soft drinks. Also these beverages, when being sweetened with the sweetening composition in accordance with the present invention, do not or do essentially not exhibit a slow onset of the sensation of sweetness but provide a rather harmonic sweetening profile and do not or do essentially not have a bitter or licorice-like aftertaste.

It is another benefit of sweetening compositions of the present invention that beverages can be obtained which, if at all, contain natural sugars such as sweet-tasting carbohydrates and/or sweet-tasting sugar alcohols in a very reduced amount.

The sweetening compositions of the present invention can also comprise, for example when used with energy drinks, further ingredients such as sodium citrate, glucoronolactone, inositol, at least one vitamin, e.g. niacin, pantothenic acid, vitamin B6, vitamin B12, riboflavin, caustic caramel, caustic sulfite caramel, ammonia caramel, sulfite ammonia caramel or ascorbic acid or mixtures thereof.

The sweetening composition of the present invention can be used for sweetening beverages, in particular soft drinks or energy drinks. The beneficial effects coming along with the use of the sweetening composition of the present invention can in particular also be accomplished with carbonated beverages.

The problem of the present invention has also been solved by a method comprising the steps of a) providing a sweetening composition according to the present invention, b) providing water and c) mixing components provided under a) and b). The process of the present invention particularly further comprises the step (step d)) of carbonating the beverage.

According to another embodiment, the process of the present invention can further comprise the step of adding at least one thickening agent, at least one sweet-tasting natural carbohydrate, at least one sweet-tasting sugar alcohol, at least one organic acid and/or at least one flavoring ingredient to the sweetening composition according to the present invention or to a mixture comprising water and one of said sweetening compositions of the present invention. The aforementioned components may also be added to water prior to mixing with any of said sweetening compositions of the present invention. Here, the definitions provided above for thickening agent, sweet-tasting natural carbohydrate, sweet-tasting sugar alcohol, organic acid and flavoring ingredient are applicable as well both in terms of general information and preferred embodiments.

Furthermore, it is also possible that the sweet-tasting natural carbohydrates and/or at least one sweet-tasting sugar alcohol are added to the mixture comprising water and the sweetening compositions of the present invention prior to and/or after the carbonating step, preferably prior to the carbonating step.

The sweetening compositions of the present invention as well as the beverages of the present invention, e.g. soft drinks or energy drinks, in one embodiment can also comprise common additives such as amino acids, coloring agents, bulking agents, modified starches, texturizers, preservatives, antioxidants, emulsifiers, stabilizers, gelling agents or arbitrary mixtures thereof.

With the present invention it has been surprisingly found that sweetening compositions are accessible which do not exhibit a slow onset in the sweetening sensation. As an additional effect it is also possible to arrive at such sweetening compositions which do not have a bitter aftertaste and/or which also do not have a metallic aftertaste. Moreover, it has surprisingly been found that with the sweetening compositions of the present invention an aroma or sweetening profile can be accomplished which resembles that of beverages having been sweetened with natural sugars, even with carbonated beverages. Furthermore, it has surprisingly been found that with at least one tannin, in particular tannic acid and/or tannic acid derivatives, being present in the compositions of the present invention the long-lasting sweetening sensations of artificial sweeteners as, for example, stevia compounds can be shortened furnishing a natural or an essential natural sweetening sensation, that is a sweetening profile regularly caused by known high caloric sugars.

It is, thus, possible with the sweetening composition of the present invention to prepare beverages, in particular carbonated beverages, such as soft drinks and energy drinks which though having a significantly reduced caloric content exhibit an improved sweetness and aroma profile and which in a preferred embodiment also do not differ significantly in their taste from conventional beverages having been sweetened with natural sugars and/or artificial sweeteners. This also includes that a sweetened sensation is perceived by the consumer already at the very beginning. In addition, with the sweetening composition of the present invention beverages can be obtained which do not have an insipid or blunt taste or mouthfeel.

In the meaning of the present invention artificial sweeteners shall comprise all sweeteners different from natural sweeteners such as natural monosaccharide and disaccharide sweeteners, e.g. glucose and sucrose.

The beverages of the present invention comprise, in particular carbonated, soft drinks and energy drinks. Suitable soft drinks also include cola-flavored soft drinks, wherein cola-flavored soft drinks also encompass cola-flavored-type soft drinks. Also these beverages, when being sweetened with the sweetening composition in accordance with the present invention, do not or do essentially not exhibit a slow onset of the sensation of sweetness but provide a rather harmonic sweetening profile and do not or do essentially not have a bitter or licorice-like aftertaste.

That is, with the present invention, in particular with the combined use of rubusoside and/or at least one rubusoside derivative and/or neohesperidin and/or thaumatine and/or phloretin and/or trilobatin and/or monatin and/or hesperetin and/or at least one enzyme-treated steviol glycoside, in particular rubusoside and/or at least one rubusoside derivative, and at least one tannin, in particular tannic acid and/or a tannic acid derivative, beverages are accessible which though having been sweetened or co-sweetened with artificial sweeteners such as stevia compounds exhibit a temporal sweetness profile as to onset time, duration, i.e. linger, and, if need be, intensity of sweetness being rather similar to that of sucrose. Accordingly, the present invention not only allows shifting the slow onset of, for example, stevia compounds towards that of sucrose, i.e. thereby exhibiting a more rapid onset, but also aids in significantly reducing the lingering effect.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description and in the claims could be essential alone or in every combination for the realization of the invention in its different embodiments.

## Claims

1. A sweetening composition comprising
a) acesulfam and/or aspartame,
b) sucralose and/or at least one stevia compound, in particular selected from the group consisting of steviol glycosides, rebaudiosides and mixtures thereof, and/or saccharin and/or cyclamate,
c) neohesperidin and/or thaumatine and/or rubusoside and/or at least one rubusoside derivative and/or phloretin and/or trilobatin and/or monatin and/or hesperetin,
d) at least one tannin, in particular tannic acid and/or at least one tannic acid derivative or a composition or extract containing tannic acid and/or at least one tannic acid derivative
wherein component d), in particular tannic acid and/or at least one tannic acid derivative, is present in an amount, based on the at least one tannin, in particular tannic acid and the at least one tannic acid derivative, in the range from 10 mg/l to 300 mg/l and preferably in the range from 25 to 250 mg/l, and
wherein, based on the total weight of component a), in particular acesulfam, component b), in particular sucralose, component c), in particular neohesperidine, and component d), in particular tannic acid and/or at least one tannic acid derivative, the component a) is present in an amount in the range from 10 to 50 wt-%,the component b) is present in an amount in the range from 15 to 65 wt-%, the component c) is present in an amount in the range from 0,1 to 4 wt-%, and the component d) is present in an amount in the range from 5 to 50 wt-%, wherein in each case the sum of components a, b), c) and d) always adds up to 100 wt-%.

2. The sweetening composition according to claim 1, wherein,
based on the total weight of component a), in particular acesulfam, component b), in particular sucralose, component c), in particular neophesperidine, and component d), in particular tannic acid and/or at least one tannic acid derivative, the component a) is present in an amount in the range from 15 to 45 wt-%, in particular 20 to 40 wt-%,the component b) is present in an amount in the range from 20 to 55 wt-%, in particular 30 to 45 wt-%, the component c) is present in an amount in the range from 0,2 to 3 wt-%, in particular 0,5 to 2 wt-%, and the component d) is present in an amount in the range from 10 to 40 wt-%, in particular 15 to 35 wt-%, wherein in each case the sum of components a), b), c) and d) always adds up to 100 wt-%,

3. The sweetening composition according to claim 1 or 2, wherein
component b) comprises or consists of sucralose, saccharin and cyclamate or wherein
component b) comprises or consists of at least one stevia compound, in particular selected from the group consisting of steviol glycosides, rebaudiosides and mixtures thereof, saccharin and cyclamate.

4. The sweetening composition according to any of the preceding claims, wherein, based on the total weight of component b), component c), in particular rubusoside and/or at least one rubusoside derivative, and component d), in particular tannic acid and/or at least one tannic acid derivative, the component b) is present in an amount in the range from 50 to 70 wt-%, in particular 55 to 65 wt-%, the component c), in particular rubusoside and/or at least one rubusoside derivative, is present in an amount in the range from 5 to 35 wt-%, in particular 10 to 30 wt-%, and the component d), in particular tannic acid and/or at least one tannic acid derivative, is present in an amount in the range from 5 to 35 wt-%, in particular 10 to 30 wt-%, wherein in each case the sum of components b), c) and d) always adds up to 100 wt-%.

5. The sweetening composition according to any one of the preceding claims, wherein acesulfam and/or aspartame is present in an amount in the range from 25 to 250 mg/l, preferably in the range from 50 to 200 mg/l and more preferably in the range from 75 to 150 mg/l, and/or wherein
sucralose is present in an amount in the range from 20 to 750 mg/l, preferably in the range from 40 mg/l to 550 mg/l and more preferably in the range from 60 to 450 mg/l, and/or wherein
neohesperidin is present in an amount in the range from 0.01 mg/l to 20 mg/l, preferably in the range from o,1 mg/l to 15 mg/l and more preferably in the range from 1,0 to to mg/l, and/or wherein
saccharin is present in an amount in the range from 10 mg/l to 750 mg/l, preferably in the range from 20 mg/l to 500 mg/l and more preferably in the range from 30 to 400 mg/l, and/or wherein
cyclamate is present in an amount in the range from 10 mg/l to 500 mg/1, preferably in the range from 50 mg/l to 300 mg/l and more preferably in the range from 75 to 200 mg/1, and/or wherein
thaumatine is present in an amount in the range from 0.01 mg/l to 10 mg/1, preferably in the range from 0,05 mg/l to 5 mg/l and more preferably in the range from 0,1 to 2 mg/1, and/or wherein
rubusoside and/or at least one rubusoside derivative is/ are present in an amount in the range from 5 to 200 mg/1, preferably in the range from 10 mg/l to 150 mg/l and more preferably in the range from 20 to 125 mg/l, and/or wherein
phloretin is present in an amount in the range from 1 to 250 mg/l, preferably in the range from 5 mg/l to 200 mg/l and more preferably in the range from 10 to 150 mg/1, and/or wherein
trilobatin is present in an amount in the range from 0,1 to 250 mg/1, preferably in the range from 1 mg/l to 200 mg/l and more preferably in the range from 5 to 150 mg/1, and/or wherein
monatin is present in an amount in the range from 0.01 mg/l to 20 mg/1, preferably in the range from 0,1 mg/l to 10 mg/l and more preferably in the range from 0,05 to 5 mg/1, and/or wherein
hesperetin is present in an amount in the range from 1 to 750 mg/l, preferably in the range from 10 mg/l to 500 mg/l and more preferably in the range from 25 to 250 mg/l.

6. The sweetening composition according to any of the preceding claims, wherein the at least one stevia compound is a mixture comprising, in particular consisting of, rebaudioside A, rebaudioside B and rebaudioside D wherein, based on the total weight of rebaudioside A, rebaudioside B and rebaudioside D, rebaudioside A is present in an amount in the range from 80.0 to 99.0 wt-%, in particular in the range from 85.0 to 95.0 wt-% and more preferably in the range from 86.0 to 94.3 wt-%, rebaudioside B is present in an amount in the range from 0.1 to 1.5 wt-%, in particular in the range from 0.2 to 1.2 wt-% and more preferably in the range from 0.3 to 0.9 wt-%, and rebaudioside D is present in an amount in the range from 0.9 to 18.5 wt-%, in particular in the range from 4.8 to 13.8 wt-% or in the range from 5.4 to 13.1 wt-%.

7. The sweetening composition according to any of claims 1 to 6, wherein,
based on the total weight of rebaudioside A, rebaudioside B and rebaudioside D,
rebaudioside A is present in an amount in the range from 90.5 to 94.0 wt-%,
rebaudioside B is present in amount in the range from 0.2 to 1.0 wt-% and
rebaudioside D is present in amount in the range from 5.8 to 8.5 wt-%;
or
wherein, based on the total weight of rebaudioside A, rebaudioside B and rebaudioside D,
rebaudioside A is present in an amount in the range from 90.9 to 94.4 wt-%,
rebaudioside B is present in amount in the range from 0.2 to 0.5 wt-% and
rebaudioside D is present in amount in the range from 5.4 to 8.6 wt-%.

8. The sweetening composition according to any of the preceding claims further comprising
at least one flavoring ingredient selected from the group consisting of galangal, cocoa, cinnamon, lemon, lemon juice concentrate, coca leaf, orange, orange oil, corn mint, pine, cardamom, mace, clove, lime, lime oil, nutmeg, nutmeg oil, mustard seeds, mustard seed oil, caramel, rosemary, pepper, honey, ginger, vanilla, licorice, licorice extract, cola nut and cola nut extract or mixtures thereof, and/or further comprising taurine and/or caffeine.

9. The sweetening composition according to any of the preceding claims, wherein said composition is a dry mixture, in particular in powder and/or particulate form.

10. The sweetening composition according to any of claims 1 to 8 further comprising water.

11. Use of the sweetening composition of any of the preceding claims for sweetening non-carbonated or carbonated beverages, in particular soft drinks or energy drinks, or as non-carbonated or carbonated beverages, in particular soft drinks or energy drinks.

12. Use of the sweetening composition of any of claims 1 to 10 for preparing a syrup as a precursor in the preparation of an, in particular carbonated, beverage, in particular a soft drink or an energy drink.

13. Use of the sweetening composition of any of claims 1 to 10 for preparing an, in particular carbonated, beverage.

14. Beverage, in particular carbonated beverage, comprising or consisting of the sweetening composition according to any of claims 1 to 10.

15. Beverage according to claim 14, wherein
rebaudioside A, B and D in combination are present in the beverage in a concentration in the range from 0.01 to 1.0 g/l, preferably from 0.05 to 0.75 g/l and more preferably from 0.1 to 0.6 g/l.

16. Beverage according to claim 14 or 15 **characterized in that** it is a soft drink, in particular a cola-flavored or cola-flavored-type soft drink, or an energy drink.

17. Process for preparing a beverage according to any of claims 14 to 16 comprising the steps of
a) providing a sweetening composition according to any of claims 1 to 10,
b) providing water and
c) mixing components provided under a) and b).

18. Process according to claim 17 further comprising the step (step d)) of carbonating the beverage.

19. Process according to claim 17 or 18 further comprising the step of adding at least one thickening agent, at least one sweet-tasting natural carbohydrate, at least one sweet-tasting sugar alcohol, at least one organic acid and/or at least one flavoring ingredient to the sweetening composition prior to mixing with water or to a mixture comprising water and the sweetening composition and/or to water prior to mixing with the sweetening composition, and/or wherein
the sweet-tasting natural carbohydrates and/or at least one sweet-tasting sugar alcohol, are added to the mixture comprising water and the sweetening composition prior to and/or after the carbonating step.

20. Use of the sweetening composition of any of claims 1 to 10 comprising i) rubusoside and/or at least one rubusoside derivative and/or neohesperidin and/or thaumatine and/or phloretin and/or trilobatin and/or monatin and/or hesperetin and/or at least one enzyme-treated steviol glycoside, in particular rubusoside or at least one rubusoside derivative or neohesperidin or at least one enzyme-treated steviol glycoside or any combination thereof, and ii) at least one tannin, in particular tannic acid and/or at least one tannic acid derivative or a composition or extract containing tannic acid and/or at least one tannic acid derivative, for shortening, in particular with beverages, the lingering sweetness of artificial sweeteners, in particular of stevia compounds, and for shifting the onset of the temporal sweetness sensation of said artificial sweetener towards that of natural sugars, in particular to that of sucrose.

## Patentansprüche

1. Zusammensetzung zum Süßen, umfassend
a) Acesulfam und/oder Aspartam,
b) Suclarose und/oder mindestens eine Stevia-Verbindung, insbesondere ausgewählt aus der Gruppe bestehend aus Steviolglykosiden, Rebaudiosiden und Gemischen davon, und/oder Saccharin und/oder Cyclamat,
c) Neohesperidin und/oder Thaumatin und/oder Rubusosid und/oder mindestens ein Rubusosid-Derivat und/oder Phloretin und/oder Trilobatin und/oder Monatin und/oder Hesperetin,
d) mindestens ein Tannin, insbesondere Tanninsäure und/oder mindestens ein Tanninsäure-Derivat oder eine Zusammensetzung oder ein Extrakt, enthaltend Tanninsäure und/oder mindestens ein Tanninsäure-Derivat, wobei Komponente d), insbesondere Tanninsäure und/oder mindestens ein Tanninsäure-Derivat, in einer Menge, bezogen auf das mindestens eine Tannin, insbesondere Tanninsäure und das mindestens eine Tanninsäure-Derivat, in dem Bereich von 10 mg/l bis 300 mg/l und bevorzugt in dem Bereich von 25 bis 250 mg/l vorliegt, und
wobei, bezogen auf das Gesamtgewicht von Komponente a), insbsondere Acesulfam, Komponente b), insbesondere Suclarose, Komponente c), insbesondere Neohesperidin und Komponente d) , insbesondere Tanninsäure und/oder mindestens ein Tanninsäure-Derivat, die Komponente a) in einer Menge in dem Bereich von 10 bis 50 Gew.-% vorliegt, die Komponente b) in einer Menge in dem Bereich von 15 bis 65 Gew.-% vorliegt, die Komponente c) in einer Menge in dem Bereich von 0,1 bis 4 Gew.-% vorliegt, und die Komponente d) in einer Menge in dem Bereich von 5 bis 50 Gew.-% vorliegt,
wobei in jedem Fall die Summe der Komponenten a), b), c) und d) immer 100 Gew.-% beträgt.

2. Die Zusammensetzung zum Süßen nach Anspruch 1, wobei,
bezogen auf das Gesamtgewicht von Komponente a), insbsondere Acesulfam, Komponente b), insbesondere Suclarose, Komponente c), insbesondere Neohesperidin und Komponente d) , insbesondere Tanninsäure und/oder mindestens ein Tanninsäure-Derivat, die Komponente a) in einer Menge in dem Bereich von 15 bis 45 Gew.-%, insbesondere 20 bis 40 Gew.-%, vorliegt,
die Komponente b) in einer Menge in dem Bereich von 20 bis 55 Gew.-%, insbesondere 30 bis 45 Gew.-%, vorliegt,die Komponente c) in einer Menge in dem Bereich von 0,2 bis 3 Gew.-%, insbesondere 0,5 bis 2 Gew.-%, vorliegt, und
die Komponente d) in einer Menge in dem Bereich von 10 bis 40 Gew.-%, insbesondere 15 bis 35 Gew.-%, vorliegt, wobei in jedem Fall die Summe der Komponenten a), b), c) und d) immer 100 Gew.-% beträgt.

3. Die Zusammensetzung zum Süßen nach Anspruch 1 oder 2, wobei
die Komponente b) Sucralose, Saccharin und Cyclamat umfasst oder daraus besteht oder wobei die Komponente b) mindestens eine Stevia-Verbindung umfasst oder daraus besteht, insbesondere ausgewählt aus der Gruppe bestehend aus Steviolglycosiden, Rebaudiosiden und Mischungen davon, Saccharin und Cyclamat.

4. Zusammensetzung zum Süßen nach einem der vorangehenden Ansprüche, wobei, bezogen auf das Gesamtgewicht von Komponente b), Komponente c), insbesondere Rubusosid und/oder mindestens ein Rubusosid-Derivat, und Komponente d), insbesondere Tanninsäure und/oder mindestens ein Tanninsäure-Derivat, die Komponente b) in einer Menge in dem Bereich von 50 bis 70 Gew.-%, insbesondere 55 bis 65 Gew.-%, vorliegt,
die Komponente c), insbesondere Rubusosid und/oder mindestens ein Rubusosid-Derivat, in einer Menge in dem Bereich von 5 bis 35 Gew.-%, insbesondere 10 bis 30 Gew.-%, vorliegt, und
die Komponente d), insbesondere Tanninsäure und/oder mindestens ein Tanninsäure-Derivat, in einer Menge in dem Bereich von 5 bis 35 Gew.-%, insbesondere 10 bis 30 Gew.-%, vorliegt,
wobei in jedem Fall die Summe der Komponenten b), c) und d) immer 100 Gew.-% beträgt.

5. Zusammensetzung zum Süßen nach einem der vorangehenden Ansprüche, wobei Acesulfam und/oder Aspartam in einer Menge in dem Bereich von 25 mg/l bis 250 mg/l, vorzugsweise in dem Bereich von 50 mg/l bis 200 mg/l und stärker bevorzugt in dem Bereich von 75 bis 150 mg/l vorliegt, und/ oder wobei
Sucralose in einer Menge in dem Bereich von 20 mg/l bis 750 mg/1, vorzugsweise in dem Bereich von 40 mg/l bis 550 mg/l und stärker bevorzugt in dem Bereich von 60 bis 450 mg/l vorliegt, und/oder wobei
Neohesperidin in einer Menge in dem Bereich von 0,01 mg/l bis 20 mg/l, vorzugsweise in dem Bereich von 0,1 mg/l bis 15 mg/l und stärker bevorzugt in dem Bereich von 1,0 bis 10 mg/l vorliegt, und/ oder wobei
Saccharin in einer Menge in dem Bereich von 10 mg/l bis 750 mg/1, vorzugsweise in dem Bereich von 20 mg/l bis 500 mg/l und stärker bevorzugt in dem Bereich von 30 bis 400 mg/l vorliegt, und/ oder wobei
Cyclamat in einer Menge in dem Bereich von 10 mg/l bis 500 mg/1, vorzugsweise in dem Bereich von 50 mg/l bis 300 mg/l und stärker bevorzugt in dem Bereich von 75 bis 200 mg/l vorliegt, und/oder wobei
Thaumatin in einer Menge in dem Bereich von 0,01 mg/l bis 10 mg/l, vorzugsweise in dem Bereich von 0,05 mg/l bis 5 mg/l und stärker bevorzugt in dem Bereich von 0,1 bis 2 mg/l vorliegt, und/ oder wobei
Rubusosid und/oder mindestens ein Rubusosid-Derivat, in einer Menge in dem Bereich von 5 bis 200 mg/l, vorzugsweise in dem Bereich von 10 mg/l bis 150 mg/l und stärker bevorzugt in dem Bereich von 20 bis 125 mg/l vorliegen/vorliegt, und/oder wobei
Phloretin in einer Menge in dem Bereich von 1 bis 250 mg/l, vorzugsweise in dem Bereich von 5 mg/l bis 200 mg/l und stärker bevorzugt in dem Bereich von 10 bis 150 mg/l vorliegt, und/oder wobei
Trilobatin in einer Menge in dem Bereich von 0,1 bis 250 mg/l, vorzugsweise in dem Bereich von 1 mg/l bis 200 mg/l und stärker bevorzugt in dem Bereich von 5 bis 150 mg/l vorliegt, und/oder wobei
Monatin in einer Menge in dem Bereich von 0,01 mg/l bis 20 mg/l, vorzugsweise in dem Bereich von 0,1 mg/l bis 10 mg/l und stärker bevorzugt in dem Bereich von 0,05 bis 5 mg/l vorliegt, und/oder wobei
Hesperetin in einer Menge in dem Bereich von 1 bis 750 mg/1, vorzugsweise in dem Bereich von 10 mg/l bis 500 mg/l und stärker bevorzugt in dem Bereich von 25 bis 250 mg/l vorliegt.

6. Zusammensetzung zum Süßen nach einem der vorangehenden Ansprüche, wobei die mindestens eine Stevia-Verbindung ein Gemisch, umfassend, insbesondere bestehend aus, Rebaudiosid A, Rebaudiosid B und Rebaudiosid D, ist, wobei, bezogen auf das Gesamtgewicht von Rebaudiosid A, Rebaudiosid B und Rebaudiosid D, Rebaudiosid A in einer Menge in dem Bereich von 80,0 bis 99,0 Gew.-%, insbesondere in dem Bereich von 85,0 bis 95,0 Gew.-% und stärker bevorzugt in dem Bereich von 86,0 bis 94,3 Gew.-% vorliegt, Rebaudiosid B in einer Menge in dem Bereich von 0,1 bis 1,5 Gew.-%, insbesondere in dem Bereich von 0,2 bis 1,2 Gew.-% und stärker bevorzugt in dem Bereich von 0,3 bis 0,9 Gew.-% vorliegt, und Rebaudiosid D in einer Menge in dem Bereich von 0,9 bis 18,5 Gew.-%, insbesondere in dem Bereich von 4,8 bis 13,8 Gew.-% oder in dem Bereich von 5,4 bis 13,1 Gew.-% vorliegt.

7. Zusammensetzung zum Süßen nach einem der Ansprüche 1 bis 6, wobei, bezogen auf das Gesamtgewicht von Rebaudiosid A, Rebaudiosid B und Rebaudiosid D, Rebaudiosid Ain einer Menge in dem Bereich von 90,5 bis 94,0 Gew.-% vorliegt, Rebaudiosid B in einer Menge in dem Bereich von 0,2 bis 1,0 Gew.-% vorliegt und Rebaudiosid D in einer Menge in dem Bereich von 5,8 bis 8,5 Gew.-% vorliegt; oder wobei, bezogen auf das Gesamtgewicht von Rebaudiosid A, Rebaudiosid B und Rebaudiosid D, Rebaudiosid A in einer Menge in dem Bereich von 90,9 bis 94,4 Gew.-% vorliegt, Rebaudiosid B in einer Menge in dem Bereich von 0,2 bis 0,5 Gew.-% vorliegt und Rebaudiosid D in einer Menge in dem Bereich von 5,4 bis 8,6 Gew.-% vorliegt.

8. Zusammensetzung zum Süßen nach einem der vorangehenden Ansprüche, ferner umfassend mindestens eine geschmacksgebende Zutat, ausgewählt aus der Gruppe bestehend aus Galgant, Kakao, Zimt, Zitrone, Zitronensaftkonzentrat, Kokablatt, Orange, Orangenöl, Ackerminze, Pinie, Kardamom, Muskatblüte, Gewürznelke, Limette, Limettenöl, Muskatnuss, Muskatnussöl, Senfsamen, Senfsamenöl, Karamell, Rosmarin, Pfeffer, Honig, Ingwer, Vanille, Lakritz, Lakritzextrakt, Kolanuss und Kolanussextrakt oder Gemischen davon, und/oder ferner umfassend Taurin und/oder Coffein.

9. Zusammensetzung zum Süßen nach einem der vorangehenden Ansprüche, wobei die Zusammensetzung ein trockenes Gemisch, insbesondere in Pulver- und/oder Partikelform, ist.

10. Zusammensetzung zum Süßen nach einem der Ansprüche 1 bis 8, weiterhin umfassend Wasser.

11. Verwendung der Zusammensetzung zum Süßen nach einem der vorangehenden Ansprüche zum Süßen von nicht kohlensäurehaltigen oder kohlensäurehaltigen Getränken, insbesondere Softdrinks oder Energydrinks, oder als nicht kohlensäurehaltige oder kohlensäurehaltige Getränke, insbesondere Softdrinks oder Energydrinks.

12. Verwendung der Zusammensetzung zum Süßen nach einem der Ansprüche 1 bis 10 zur Herstellung eines Sirups als Vorstufe bei der Herstellung eines, insbesondere kohlensäurehaltigen, Getränks, insbesondere eines Softdrinks oder eines Energydrinks.

13. Verwendung der Zusammensetzung zum Süßen nach einem der Ansprüche 1 bis 10 zur Herstellung eines, insbesondere kohlensäurehaltigen, Getränks.

14. Getränk, insbesondere kohlensäurehaltiges Getränk, umfassend die oder bestehend aus der Zusammensetzung zum Süßen nach einem der Ansprüche 1 bis 10.

15. Getränk nach Anspruch 14, wobei
Rebaudiosid A, B und D in Kombination in dem Getränk in einer Konzentration in dem Bereich von 0,01 bis 1,0 g/l, vorzugsweise von 0,05 bis 0,75 g/l und stärker bevorzugt von 0,1 bis 0,6 g/l vorliegen.

16. Getränk nach Anspruch 14 oder 15, **dadurch gekennzeichnet, dass**
es ein Softdrink, insbesondere ein Softdrink mit Colageschmack oder ein Softdrink vom Colageschmackstyp, oder ein Energydrink ist.

17. Verfahren zur Herstellung eines Getränks nach einem der Ansprüche 14 bis 16, umfassend die Schritte
a) Bereitstellen einer Zusammensetzung zum Süßen nach einem der Ansprüche 1 bis 10,
b) Bereitstellen von Wasser und
c) Mischen der unter a) und b) bereitgestellten Komponenten.

18. Verfahren nach Anspruch 17, weiterhin umfassend den Schritt (Schritt d)) des Versetzens des Getränks mit Kohlensäure.

19. Verfahren nach Anspruch 17 oder 18, weiterhin umfassend den Schritt des Zugebens von mindestens einem Verdickungsmittel, mindestens einem süß schmeckenden natürlichen Kohlenhydrat, mindestens einem süß schmeckenden Zuckeralkohol, mindestens einer organischen Säure und/oder mindestens einer geschmacksgebenden Zutat zu der Zusammensetzung zum Süßen vor dem Mischen mit Wasser oder zu einem Gemisch, umfassend Wasser und die Zusammensetzung zum Süßen, und/oder zu Wasser vor dem Mischen mit der Zusammensetzung zum Süßen, und/oder wobei die süß schmeckenden natürlichen Kohlenhydrate und/oder mindestens ein süß schmeckender Zuckeralkohol zu dem Gemisch, umfassend Wasser und die Zusammensetzung zum Süßen, vor und/oder nach dem Schritt des Versetzens mit Kohlensäure zugegeben werden.

20. Verwendung der Zusammensetzung zum Süßen nach einem der Ansprüche 1 bis 10, umfassend
i) Rubusosid und/oder mindestens ein Rubusosid-Derivat und/oder Neohesperidin und/ oder Thaumatin und/ oder Phloretin und/ oder Trilobatin und/oder Monatin und/oder Hesperetin und/oder mindestens ein enzymbehandeltes Steviolglykosid, insbesondere Rubusosid oder mindestens ein Rubusosid-Derivat, oder Neohesperidin oder mindestens ein enzymbehandeltes Steviolglykosid oder eine Kombination davon, und
ii) mindestens ein Tannin, insbesondere Tanninsäure und/oder mindestens ein Tanninsäure-Derivat oder eine Zusammensetzung oder ein Extrakt, enthaltend Tanninsäure und/oder mindestens ein Tanninsäure-Derivat,
zur Verkürzung, insbesondere bei Getränken, der anhaltenden Süße von künstlichen Süßungsmitteln, insbesondere von Stevia-Verbindungen, und zur Verschiebung des Beginns der zeitlichen Wahrnehmung der Süße des künstlichen Süßungsmittels hin zu dem von natürlichen Zuckern, insbesondere hin zu dem von Saccharose.

## Revendications

1. Composition édulcorante, comprenant:
a) du acésulfame et/ou du aspartame,
b) du sucralose et/ou au moins un composé de stevia, en particulier sélectionné parmi le groupe se composant de glycosides de stéviol, de rébaudiosides et de mélanges de ceux-ci, et/ou de la saccharine et/ou du cyclamate
c) de la néohespéridine et/ou de la thaumatine et/ou du rubusoside et au moins un dérivé de rubusoside et/ou de la phlorétine et/ou de la trilobatine et/ou de la monatine et/ou de l'hespérétine,
d) au moins un tanin, en particulier de l'acide tannique et/ou au moins un dérivé d'acide tannique ou une composition ou un extrait contenant de l'acide tannique et/ou au moins un dérivé d'acide tannique,
le composant d), en particulier l'acide tannique et/ou au moins un dérivé d'acide tannique, étant présent en une quantité basé sur au moins un tanin, en particulier de l'acide tannique et l'au moins un dérivé d'acide tannique, dans la plage de 10 mg/l à 300 mg/l et préférablement dans la plage de 25 à 250 mg/ 1, et
où basé sur le poids total du composant a), en particulier du acésulfame, composant b), en particulier du sucralose, composant c), en particulier de la néohespéridine, et composant d), en particulier de l'acide tannique et/ou au moins un dérivé d'acide tannique, le composant a) étant présent dans une teneur dans la plage de 10 à 50 % massique, le composant b) étant présent dans une teneur dans la plage de 15 à 65 % massique, le composant c) étant présent dans une teneur dans la plage de 0,1 à 4 % massique, et le composant d) étant présent dans une teneur dans la plage de 5 à 50 % massique, la somme des composants a), b), c) et d) étant toujours de 100 % massique, dans chaque cas.

2. La composition édulcorante selon la revendication 1,
où basé sur le poids total du composant a), en particulier du acésulfame, composant b), en particulier du sucralose, composant c), en particulier de la néohespéridine, et composant d), en particulier de l'acide tannique et/ou au moins un dérivé d'acide tannique, le composant a) étant présent dans une teneur dans la plage de 15 à 45 % massique, en particulier dans la plage de 20 à 40 % massique, le composant b) étant présent dans une teneur dans la plage de 20 à 55 % massique, en particulier dans la plage de 30 à 45 % massique, le composant c) étant présent dans une teneur dans la plage de 0,2 à 3 % massique, en particulier dans la plage de 0,5 à 2 % massique, et le composant d) étant présent dans une teneur dans la plage de 10 à 40 % massique, en particulier dans la plage de 15 à 35 % massique,
la somme des composants a), b), c) et d) étant toujours de 100 % massique, dans chaque cas.

3. La composition édulcorante selon la revendication 1 ou 2,
le composant b) comprenant ou consistant en sucralose, saccharine et cyclamate ou le composant b) comprenant ou consistant en au moins un composé de stevia, en particulier sélectionné parmi le groupe se composant de glycosides de stéviol, de rébaudiosides et de mélanges de ceux-ci, saccharine et cyclamate.

4. La composition édulcorante selon l'une quelconque des revendications précédentes, où basé sur le poids total du composant b), composant c), en particulier du rubusoside et/ou au moins un dérivé de rubusoside, et composant d), en particulier de l'acide tannique et/ou au moins un dérivé d'acide tannique,
le composant b) étant présent dans une teneur dans la plage de 50 à 70 % massique, en particulier de 55 à 65 % massique, le composant c), en particulier du rubusoside et/ou au moins d'un dérivé de rubusoside, étant présent dans une teneur dans la plage de 5 à 35 % massique, en particulier de 10 à 30 % massique, et
le composant d), en particulier de l'acide tannique et/ou au moins un dérivé d'acide tannique, étant présent dans une teneur dans la plage de 5 à 35 % massique, en particulier de 10 à 30 % massique,
la somme des composants b), c) et d) étant toujours de 100 % massique, dans chaque cas.

5. La composition édulcorante selon l'une quelconque des revendications précédentes, où l'acésulfame et/ou l'aspartame étant présente en une quantité dans la plage de 25 à 250 mg/1, de préférence dans la plage de 50 à 500 mg/l, et plus préférablement dans la plage de 75 à 150 mg/1, et/ou
le sucralose étant présente en une quantité dans la plage de 20 à 750 mg/l, de préférence dans la plage de 40 à 550 mg/l, et plus préférablement dans la plage de 60 à 450 mg/ 1, et/ou
la néohespéridine étant présente en une quantité dans la plage de 0,01 à 20 mg/1, de préférence dans la plage de 0,1 mg/l à 15 mg/1, et plus préférablement dans la plage de 1,0 à 10 mg/ 1, et/ou
la saccharine étant présente en une quantité dans la plage de 10 à 750 mg/l, de préférence dans la plage de 40 à 500 mg/l, et plus préférablement dans la plage de 30 à 400 mg/1, et/ou
le cyclamate étant présente en une quantité dans la plage de 10 à 500 mg/l, de préférence dans la plage de 50 à 300 mg/1, et plus préférablement dans la plage de 75 à 200 mg/l, et/ou
la thaumatine étant présente en une quantité dans la plage de 0,01 à 10 mg/1, de préférence dans la plage de 0,05 mg/l à 5 mg/l, et plus préférablement dans la plage de 0,1 à 2 mg/l, et/ou
le rubusoside et/ou l'au moins un dérivé de rubusoside étant présent(s) en une quantité dans la plage de 5 à 200 mg/l, de préférence dans la plage de 10 mg/l à 150 mg/l, et plus préférablement dans la plage de 20 à 125 mg/l, et/ou
la phlorétine étant présente en une quantité dans la plage de 1 à 250 mg/l, de préférence dans la plage de 5 mg/l à 200 mg/l, et plus préférablement dans la plage de 10 à 150 mg/ 1, et/ou
la trilobatine étant présente en une quantité dans la plage de 0,1 à 250 mg/1, de préférence dans la plage de 1 mg/l à 200 mg/l, et plus préférablement dans la plage de 5 à 150 mg/ 1, et/ou
la monatine étant présente en une quantité dans la plage de 0,01 à 20 mg/l, de préférence dans la plage de 0,1 mg/l à 10 mg/l, et plus préférablement dans la plage de 0,05 à 5 mg/l, et/ou
l'hespéritine étant présente en une quantité dans la plage de 1 à 750 mg/1, de préférence dans la plage de 10 mg/l à 500 mg/1, et plus préférablement dans la plage de 25 à 250 mg/l.

6. La composition édulcorante selon l'une quelconque des revendications précédentes, l'au moins un composé de stevia étant un mélange comprenant, en particulier comprenant ou consistant en, rébaudioside A, rébaudioside B et rébaudioside D, le rébaudioside Aétant présent dans une teneur dans la plage de 80,0 à 99,0 % massique, en particulier dans la plage de 85,0 à 95,0 % massique et plus préférablement dans la plage de 86,0 à 94,3 % massique, le rébaudioside B étant présent dans une teneur dans la plage de 0,1 à 1,5 % massique, en particulier dans la plage de 0,2 à 1,2 % massique et plus préférablement dans la plage de 0,3 à 0,9 % massique, et le rébaudioside D étant présent dans une teneur dans la plage de 0,9 à 18,5 % massique, en particulier dans la plage de 4,8 à 13,8 % massique ou dans la plage de 5,4 à 13,1 % massique, basé sur le poids total de rébaudioside A, rébaudioside B et rébaudioside D.

7. La composition édulcorante selon l'une quelconque des revendications 1 à 6,
uù basé sur le poids total du rébaudioside A, du rébaudioside B et du rébaudioside D, le rébaudioside A étant présent à une teneur dans la plage de 90,5 à 94,0 % massique, le rébaudioside B étant présent à une teneur dans la plage de 0,2 à 1,0 % massique et le rébaudioside D étant présent à une teneur dans la plage de 5,8 à 8,5 % massique, basé sur le poids total du rébaudioside A, du rébaudioside B et du rébaudioside D ;
ou le rébaudioside A étant présent à une teneur dans la plage de 90,9 à 94,4 % massique, le rébaudioside B étant présent à une teneur dans la plage de 0,2 à 0,5 % massique et le rébaudioside D étant présent à une teneur dans la plage de 5,4 à 8,6 % massique.

8. La composition édulcorante selon l'une quelconque des revendications précédentes, comprenant en outre
au moins un ingrédient aromatisant sélectionné parmi le groupe se composant de galangal, cacao, cannelle, citron, concentré de jus de citron, feuille de coca, orange, essence d'orange, menthe des champs, pin, cardamome, macis, clou de girofle, citron vert, essence de citron vert, noix de muscade, huile essentielle de noix de muscade, graines de moutarde, huile de graine de moutarde, caramel, romarin, poivre, miel, gingembre, vanille, réglisse, extrait de réglisse, noix de cola et extrait de noix de cola, ou de mélanges de ceux-ci, et/ ou comprenant en outre de la taurine et/ ou de la caféine.

9. La composition édulcorante selon l'une quelconque des revendications précédentes, ladite composition étant un mélange sec, en particulier en poudre et/ou sous forme de particules.

10. La composition édulcorante selon l'une quelconque des revendications 1 à 8, comprenant en outre de l'eau.

11. Utilisation de la composition édulcorante selon l'une quelconque des revendications précédentes pour édulcorer des boissons non gazeuses ou gazeuses, en particulier des boissons non alcoolisées ou des boissons énergisantes, ou comme boissons non gazeuses ou gazeuses, en particulier des boissons non alcoolisées ou des boissons énergisantes.

12. Utilisation de la composition édulcorante selon l'une quelconque des revendications 1 à 10 pour préparer un sirop ou un précurseur dans la préparation d'une boisson, en particulier gazeuse, en particulier d'une boisson non alcoolisée ou d'une boisson énergisante

13. Utilisation de la composition édulcorante selon l'une quelconque des revendications 1 à 10 pour préparer une boisson, en particulier gazeuse.

14. Boisson, en particulier boisson gazeuse, comprenant ou se composant de la composition édulcorante selon l'une quelconque des revendications 1 à 10.

15. Boisson selon la revendication 16,
du rébaudioside A, B et D en combinaison étant présent dans la boisson à une concentration dans la plage de 0,01 à 1,0 g/1, de préférence de 0,05 à 0,75 g/1, et plus préférablement de 0,1 à 0,6 g/1.

16. Boisson selon la revendication 14 ou 15, **caractérisée en ce qu'** elle est une boisson non alcoolisée, en particulier une boisson non alcoolisée aromatisée au cola ou de type aromatisée au cola, ou une boisson énergisante.

17. Procédé pour préparer une boisson selon l'une quelconque des revendications 14 à 16, comprenant les étapes de
a) fournir une composition édulcorante selon l'une quelconque des revendications 1 à 10,
b) fournir de l'eau et
c) mélanger des composants fournis aux points a) et b).

18. Procédé selon la revendication 17, comprenant en outre l'étape (étape d)) de gazéifier la boisson.

19. Procédé selon la revendication 17 ou 18, comprenant en outre l'étape d'ajouter au moins un épaississant, au moins un glucide au goût sucré naturel, au moins un polyalcool au goût sucré, au moins un acide organique et/ou au moins un ingrédient aromatisant à la composition édulcorante avant de mélanger avec de l'eau ou à un mélange comprenant de l'eau et la composition édulcorante et/ou à de l'eau avant de mélanger avec la composition édulcorante, et/ou les glucides au goût sucré naturel et/ou au moins un polyalcool au goût sucré étant ajoutés au mélange comprenant de l'eau et la composition édulcorante avant et/ou après l'étape de gazéification.

20. Utilisation de la composition édulcorante selon l'une quelconque des revendications 1 à 10, comprenant
i) du rubusoside et/ou au moins un dérivé de rubusoside et/ou de la néohespéridine et/ou de la thaumatine et/ou de la phlorétine et/ou de la trilobatine et/ou de la monatine et/ou de l'hespérétine et/ou au moins un glycoside de stéviol traité aux enzymes, en particulier du rubusoside ou au moins un dérivé de rubusoside ou de la néohespéridine ou au moins un glycoside de stéviol traité aux enzymes ou une quelconque combinaison de ceux-ci, et
ii) au moins un tanin, en particulier de l'acide tannique et/ou au moins un dérivé d'acide tannique ou une composition ou un extrait contenant de l'acide tannique et/ ou au moins un dérivé d'acide tannique, pour raccourcir, en particulier avec des boissons, la sucrosité persistante d'édulcorants artificiels, en particulier de composés de stévia, et pour décaler le début de la sensation de sucrosité temporelle dudit édulcorant artificiel vers celle des sucres naturels, en particulier celle du saccharose.
